(19) Europäisches Patentamt
European Patent Office
Office européen des brevets

(11) EP 4 538 060 A1

(12) **EUROPEAN PATENT APPLICATION**
published in accordance with Art. 153(4) EPC

(43) Date of publication:
**16.04.2025 Bulletin 2025/16**

(21) Application number: **23826800.7**

(22) Date of filing: **26.04.2023**

(51) International Patent Classification (IPC):
***B60C 11/00*** *(2006.01)* ***B60C 1/00*** *(2006.01)*
***B60C 11/03*** *(2006.01)* ***C08F 236/10*** *(2006.01)*
***C08K 3/04*** *(2006.01)* ***C08K 3/36*** *(2006.01)*
***C08L 9/06*** *(2006.01)*

(52) Cooperative Patent Classification (CPC):
**B60C 1/00; B60C 11/00; B60C 11/03; C08F 236/10; C08K 3/04; C08K 3/36; C08L 9/06;** Y02T 10/86

(86) International application number:
**PCT/JP2023/016409**

(87) International publication number:
**WO 2023/248611 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 JP 2022101529**

(71) Applicant: **SUMITOMO RUBBER INDUSTRIES, LTD.**
**Kobe-shi, Hyogo 651-0072 (JP)**

(72) Inventor: **NAKAMURA, Kentaro**
**Kobe-shi, Hyogo 651-0072 (JP)**

(74) Representative: **Manitz Finsterwald Patent- und Rechtsanwaltspartnerschaft mbB**
**Martin-Greif-Strasse 1**
**80336 München (DE)**

(54) **TIRE**

(57) The present invention improves steering stability during high-speed running. The tire according to the present invention includes a tread, wherein a cap rubber layer as a part of the tread is made of a rubber composition which contains a styrene/butadiene rubber (SBR) having a styrene content of 25 mass% or less in an amount of 60-80 parts by mass per 100 parts by mass of the rubber component, contains silica in an amount of 100 parts by mass or larger per 100 parts by mass of the rubber component, and has a loss tangent (30°Ctanδ), as determined under the conditions of a temperature of 30°C, a frequency of 10 Hz, an initial strain of 5%, and a dynamic strain rate of 1% in the tensile deformation mode, of 0.27 or greater. The tread has a thickness of 13 mm or less.

## Description

[TECHNICAL FIELD]

The present invention relates to a tire.

[BACKGROUND ART]

From the standpoint of safety, tires are required to have excellent steering stability.
Therefore, various techniques have been proposed to improve the steering stability by improving the grip performance, or the like (for example, Patent Documents 1 to 4).

[PRIOR ART DOCUMENTS]

[PATENT DOCUMENT]

[Patent Document 1] JP 2011-93386 A
[Patent Document 2] JP 2013-79017 A
[Patent Document 3] JP 2014-133845 A
[Patent Document 4] JP 2016-37100 A

[SUMMARY OF INVENTION]

[PROBLEM TO BE SOLVED BY THE INVENTION]

However, with the construction of expressways in recent years, it is not uncommon to travel long distances on expressways. In this situation, the above-mentioned conventional technologies still do not provide sufficient steering stability at high-speeds, and there is a strong demand for further improvement.
Therefore, an object of the present invention is to improve the steering stability during high-speed running.

[MEANS FOR SOLVING THE PROBLEM]

The present invention is

a tire having a tread portion, wherein
a cap rubber layer forming the tread portion is formed from a rubber composition containing a rubber component which contains
a styrene-butadiene rubber (SBR) having a styrene content of 25% by mass or less in an amount of 60 parts by mass or more and 80 parts by mass or less in 100 parts by mass of the rubber component, and 100 parts by mass or more of silica relative to 100 parts by mass of the rubber component;
the rubber composition has a loss tangent (30°C tan $\delta$) measured under the conditions of a temperature of 30°C, a frequency of 10 Hz, an initial strain of 5%, and a dynamic strain rate of 1%, in a deformation mode of tension of 0.27 or more; and
the thickness of the tread portion is 13 mm or less.

[THE EFFECT OF THE INVENTION]

According to the present invention, it is possible to improve the steering stability during high-speed running.

[EMBODIMENTS FOR CARRYING OUT THE INVENTION]

[1] Characteristics of the tire according to the present invention

First, the characteristics of the tire according to the present invention will be described.

1. Overview

The tire according to the present invention comprises a carcass that is bridged between one of a pair of bead portions that are engaged with a rim and forms the framework of the tire, a belt layer that is provided radially outward from the carcass, a belt reinforcing layer that is provided radially outward from the belt layer, and a tread portion that is provided radially outward from these layers. The tread portion comprises a cap rubber layer that is provided radially outward from the tire and serves as a ground contact surface, and if necessary, a base rubber layer that is provided radially inward from the cap rubber layer.

The cap rubber layer forming the tread portion is formed from a rubber composition containing 60 to 80 parts by mass of SBR with a styrene content of 25% by mass or less in 100 parts by mass of the rubber component in the rubber composition, and 100 parts by mass or more of silica relative to 100 parts by mass of the rubber component. The loss tangent of this rubber composition measured at a temperature of 30°C, a frequency of 10 Hz, an initial strain of 5%, a dynamic strain rate of 1%, and a deformation mode of tension (30°C tan δ) is 0.27 or more. The thickness of the tread portion is 13 mm or less.

The cap rubber layer referred to here is not limited to the rubber layer that forms the outermost layer of the tread portion, and in the case where there are two or more layers within 5 mm from the tread surface toward the inside, at least one of the layers must satisfy the requirements of the rubber composition.

These characteristics make it possible to improve the steering stability during high-speed running, as will be described later.

2. Mechanism of the effect of the tire according to the present invention

The mechanism by which the above-mentioned effects are exhibited in the tire according to the present invention is considered as follows.

As described above, the cap rubber layer of the tire according to the present invention is formed from a rubber composition containing 60 parts by mass or more and 80 parts by mass or less of SBR having a styrene content of 25% by mass or less in 100 parts by mass of the rubber component.

By containing 60 to 80 parts by mass of SBR with a small amount of styrene, specifically, 25% by mass or less of styrene, in 100 parts by mass of the rubber component, it is possible to form minute styrene domains in the rubber matrix. It is considered that by setting the amount of SBR in 100 parts by mass of the rubber component to 60 to 80 parts by mass and reducing the amount of other diene rubber components contained to half or less, these minute styrene domains can be easily formed.

By forming such minute styrene domains, the tire does not lose its road surface conformance even when running at high-speeds. In addition, when an input is applied from the road surface, heat generation is easily achieved due to friction in the domains. As a result, it is possible to improve the grip performance of the tread surface, and it is considered that the steering stability during high-speed running is improved.

In the present invention, the loss tangent (30°C tan δ) of the rubber composition forming the cap rubber layer, measured under conditions of a temperature of 30°C, a frequency of 10 Hz, an initial strain of 5%, and a dynamic strain rate of 1%, in a deformation mode of tension, is 0.27 or more.

Loss tangent (tan δ) is a viscoelastic parameter that indicates the energy absorption performance, i.e., the performance of absorbing energy from the road surface and converting it into heat, and the larger the value, the more energy can be absorbed and converted into heat. Therefore, by increasing 30°C tan δ to 0.27 or more, the energy is sufficiently absorbed by the entire tread rubber and converted into heat, making it easier to cause energy loss, which is expected to improve grip performance and considered to improve steering stability during high-speed running.

In the present invention, the silica is contained in an amount equal to or more than that of the rubber component, that is, 100 parts by mass or more relative to 100 parts by mass of the rubber component. By containing such a large amount of silica, the rubber component is reinforced, and the frictional force associated with the grip performance obtained by heat generation on the tread surface and inside is easily transmitted to the inside of the tire, which is considered to improve the steering stability during high-speed running.

Furthermore, in the present invention, the thickness of the tread portion is made thin, at 13 mm or less, which is considered to shorten the internal force transmission distance and make it easier to obtain reaction force, thereby improving grip performance and improving steering stability during high-speed running.

As described above, in the tire according to the present invention, it is considered that the grip performance improvement effect obtained by the road surface conformance, heat generation due to friction in the domain portion, generation of energy loss, heat generation on the tread surface and inside, and the like, and the ease of obtaining reaction force due to the short force transmission distance all work together to improve steering stability during high-speed running.

In the present invention, the styrene content is more preferably 20% by mass or less, and further preferably 15% by mass or less, while the lower limit is preferably 3% by mass or more, more preferably 5% by mass or more, and further

preferably 8% by mass or more.

The phrase "containing 60 parts by mass or more and 80 parts by mass or less of SBR having a styrene content of 25% by mass or less in 100 parts by mass of the rubber component" means that the amount of SBR in 100 parts by mass of the rubber component is 60 parts by mass or more and 80 parts by mass or less, and the amount of styrene in the entire SBR is 25% by mass or less.

In other words, when the rubber component contains only one styrene-containing polymer (SBR), it indicates that the styrene amount is 25 % by mass or less. When the rubber component contains multiple styrene-containing polymers (SBR), it indicates that the styrene amount calculated by the sum of the product of the styrene amount (% by mass) in each polymer and the mixing amount (parts by mass) of that polymer in 100 parts by mass of the rubber component is 25 % by mass or less.

More specifically, when 100 parts by mass of the rubber component contains SBR1 (X1 parts by mass) having a styrene amount S1% by mass and SBR2 (X2 parts by mass) having a styrene amount S2% by mass, the amount of styrene calculated from the formula $\{(S1\times X1)+(S2\times X2)\}/(X1+X2)$ is 25% by mass or less.

In addition, in the rubber composition after vulcanization, the amount of styrene can also be calculated by determining the amount of styrene contained in the rubber component after acetone extraction using solid-state nuclear magnetic resonance (solid-state NMR) or a Fourier transform infrared spectrophotometer (FTIR).

In the present invention, the content of silica is more preferably 110 parts by mass or more, and further preferably 120 parts by mass or more, relative to 100 parts by mass of the rubber component. In consideration of the kneading processability of the rubber composition, the upper limit is preferably 150 parts by mass or less, more preferably 140 parts by mass or less, and further preferably 130 parts by mass or less.

In the present invention, the 30°C tan $\delta$ is more preferably 0.28 or more, further preferably 0.30 or more, and further preferably 0.33 or more. The upper limit is not particularly limited, but is preferably 0.40 or less, more preferably 0.38 or less, and further preferably 0.35 or less.

Here, the "loss tangent (tan $\delta$)" can be measured using a viscoelasticity measuring device such as "Eplexor (registered trademark)" manufactured by GABO Corporation.

Furthermore, in the present invention, the thickness of the tread portion is more preferably 12 mm or less, further preferably 10 mm or less, further preferably 9 mm or less, and further preferably 7 mm or less. The lower limit is preferably 4 mm or more, more preferably 5 mm or more, and further preferably 6 mm or more.

The "thickness of the tread portion" as used herein refers to the thickness of the tread portion on the tire equatorial plane in the tire radial cross section. When the tread portion is formed of a single rubber composition, it refers to the thickness of that rubber composition. When the tread portion is formed of a stacked structure of multiple rubber compositions described below, it refers to the total thickness of these layers.

When the tire has grooves on the equatorial plane, this refers to the thickness from the intersection of a straight line connecting the radially outermost end points of the grooves with the equatorial plane of the tire to the radially innermost interface of the tread portion.

The tread portion is a member of the region that forms the contact surface of the tire, and refers to the portion radially outward of the members that contain fiber materials or the like such as the carcass, belt layer, belt reinforcing layer, and the like. The thickness of the tread portion can be measured by aligning the bead portion with the standardized rim width in a cross section cut out in the radial direction of the tire.

In the above description, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". Reference is made in the order of JATMA, ETRTO, and TRA, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

[2] More preferred embodiments of the tire according to the present invention

The tire according to the present invention can achieve even greater effects by adopting the following aspects.

1. Loss tangent (tan $\delta$) of the cap rubber layer

During high-speed running, the cap rubber layer of the tread portion experiences slight slippage on the road surface, and the surface side of the rubber layer is greatly affected by the low-temperature physical properties. Therefore, when the 30°C tan $\delta$ is not so large even if it is above described 0.27 or more, it is considered that the frictional properties on

the surface of the tread portion can be improved by increasing the loss tangent (0°C tan $\delta$) at the lower temperature of 0°C, thereby improving the steering stability during high-speed running.

On the other hand, since the loss tangent can also be considered as an index showing the phase difference between the input/response of the rubber, if both 0°C tan $\delta$ and 30°C tan $\delta$ are large, the time required for the friction generated on the rubber surface to be transmitted to the inside of the tire and then for the reaction force to be transmitted to the road surface will be longer, and there is a concern that this will lead to a deterioration in responsiveness and reduced steering stability during high-speed running when the time that the tread portion is in contact with the road surface is short.

Therefore, the present inventors have studied the preferable relationship between tan $\delta$ at 30°C and tan $\delta$ at 0°C. As a result, they have concluded that if $\alpha$ in the following formula (1) is 1.19 or more, more preferably 1.2 or more, the responsiveness is not deteriorated even during high-speed running, and the steering stability is not deteriorated, so that the steering stability during high-speed running is further improved:

$$\alpha = 0℃\tan\delta + 3 \times 30℃\tan\delta \qquad (1).$$

The above $\alpha$ is more preferably 1.28 or more, further preferably 1.35 or more, further preferably 1.36 or more, further preferably 1.37 or more, further preferably 1.55 or more, and further preferably 1.8 or more.

2. Relationship between 30°C tan $\delta$ of the cap rubber layer and the thickness of the tread portion

As described above, in order to improve the steering stability during high-speed running, the larger the 30°C tan $\delta$, the better, while the thinner the tread thickness, the better. Therefore, the inventors considered that there is a favorable relationship between 30°C tan $\delta$ and the thickness G (mm) of the tread, and carried out further studies. As a result, they considered that if $\beta$ in the following formula (2) is 0.023 or more, more preferably 0.027 or more, the cap rubber layer can obtain sufficient grip performance with respect to the force transmission distance to the inside of the tire, and reaction force can also be easily obtained, so that steering stability during high-speed running can be further improved.

$$\beta = 30℃\tan\delta / G \qquad (2)$$

The above $\beta$ is more preferably 0.028 or more, further preferably 0.030 or more, further preferably 0.031 or more, further preferably 0.045 or more, and further preferably 0.055 or more.

3. Multi-layered tread

In the present invention, the tread portion may be formed of only one layer of the cap rubber layer, or may be formed of two layers by providing a base rubber layer inside the cap rubber layer, or may be formed of three layers, or may be formed of four layers or more. In this case, the thickness of the cap rubber layer in the entire tread portion is preferably 10% or more. This makes it possible to generate sufficient friction between the tread portion surface and the road surface during high-speed running, thereby sufficiently transmitting frictional force to the inside of the tire, thereby further improving grip performance and allowing excellent steering stability to be exhibited. The thickness is more preferably 70% or more.

As described above, in the case where the tire is formed of a layered structure of a plurality of rubber compositions, the "thickness of the tread portion" refers to the total thickness of the stacked layers. In the case where the tire has grooves on the equatorial plane of the tire, the "thickness of the tread portion" refers to the thickness from the intersection of the straight line connecting the outermost end points of the grooves in the radial direction of the tire with the equatorial plane of the tire to the innermost interface of the tread portion in the radial direction of the tire.

In this case, it is preferable that the 30°C tan $\delta$ of the base rubber layer is smaller than 30°C tan $\delta$ of the cap rubber layer, which is considered to reduce the phase difference until the response is initiated inside the tire with respect to the grip performance generated in the cap rubber layer, improving responsiveness and thus improving steering stability.

The 30°C tan $\delta$ of the cap rubber layer and base rubber layer can be appropriately adjusted depending on the amount and type of compounded materials described below, and can be increased, for example, by increasing the styrene content in the rubber component, increasing the SBR content in the rubber component, increasing the styrene content in the SBR component, increasing the content of fillers such as silica and carbon black, increasing the content of resin components, and the like. Conversely, it can be decreased by decreasing the styrene content in the rubber component, decreasing the SBR content in the rubber component, decreasing the styrene content in the SBR component, decreasing the content of fillers such as silica and carbon black, decreasing the content of resin components, and the like.

4. Particle size of silica contained in the cap rubber layer

In the present invention, the particle size (average primary particle size) of the silica contained in the cap rubber layer is preferably 17 nm or less from the viewpoint of improving reinforcing properties.
The average primary particle diameter can be calculated by directly observing silica particles extracted from a rubber composition cut out from a tire using a transmission electron microscope (TEM) or the like, calculating the equivalent cross-sectional area diameter from the area of each silica particle obtained, and calculating the average value.

5. Resin component content in the cap rubber layer

In the present invention, the rubber composition forming the cap rubber layer preferably contains a resin component.
By including a resin component in the rubber composition, the adhesiveness of the resin component ensures grip performance on the road surface even during high-speed running, thereby improving steering stability.
Preferred resin components include rosin-based resins, styrene-based resins, coumarone-based resins, terpene-based resins, C5 resins, C9 resins, C5C9 resins, and acrylic resins, which will be described later, and among these, styrene-based resins such as $\alpha$-methylstyrene are more preferred. The content relative to 100 parts by mass of the rubber component is preferably 10 parts by mass or more, more preferably 20 parts by mass or more, and further preferably 25 parts by mass or more. In consideration of the softening of the rubber, the upper limit is preferably 45 parts by mass or less, more preferably 40 parts by mass or less, further preferably 35 parts by mass or less, and further preferably 30 parts by mass or less.

6. Acetone extractables (AE) of the cap rubber layer

In the present invention, the acetone extractables (AE) of the cap rubber layer is preferably 20% by mass or more, more preferably 21% by mass or more, and further preferably 22% by mass or more, from the viewpoint of exhibiting excellent steering stability by stable grip performance during high-speed running. On the other hand, the upper limit is not particularly limited, but is preferably 26% by mass or less, more preferably 25% by mass or less, further preferably 24.6% by mass or less, further preferably 24.3% by mass or less, further preferably 24.2% by mass or less, further preferably 24% by mass or less, and further preferably 23.7% by mass or less.
The acetone extractables (AE) can be considered as an index showing the amount of softener in the rubber composition, and can also be considered as an index showing the softness of the rubber composition. Therefore, by appropriately controlling the amount of AE in the cap rubber layer, the tire can ensure a sufficient contact area with the road surface during high-speed running, thereby exhibiting stable grip performance and excellent steering stability.
The acetone extractables (AE) can be measured in accordance with JIS K 6229: 2015. Specifically, the AE (% by mass) can be obtained by immersing a vulcanized rubber test piece cut out from the measurement site in acetone for a predetermined time and determining the mass loss rate (%) of the test piece.
More specifically, each vulcanized rubber test piece is immersed in acetone for 72 hours at room temperature and normal pressure to extract the soluble components, and the mass of each test piece before and after extraction is measured, and the acetone extractables (AE) can be calculated according to the following formula.

Acetone extractable (%) = {(mass of rubber test piece before extraction - mass of rubber test piece after extraction) / (mass of rubber test piece before extraction)} $\times$ 100

The acetone extractables can be appropriately changed by changing the compounding ratio of the plasticizer in the rubber composition.

7. Land Ratio

In the tire according to the present invention, when mounted on a standardized rim and under standardized internal pressure, the land ratio in the tread portion of the tire is preferably 40% or more, more preferably 55% or more, further preferably 60% or more, further preferably 65% or more, and further preferably 63% or more.
"Land ratio" is the ratio of the actual contact area to a hypothetical contact area in which all grooves on the surface of the tread are filled. A larger land ratio means a larger area in contact with the road surface, which results in sufficient and stable grip performance and excellent steering stability.
The upper limit of the land ratio is not particularly limited, but is preferably 95% or less.
In addition, the product of the content (parts by mass) of styrene butadiene rubber (SBR) having a styrene content

of 25% by mass or less in 100 parts by mass of the rubber component and the land ratio (%) in the tread portion is preferably 6400 or less, more preferably 6000 or less, further preferably 5600 or less, further preferably 5200 or less, further preferably 4550 or less, and further preferably 3900 or less. The lower limit is not particularly limited, but is, for example, 3000 or more. This allows the effect of the network due to the styrene domain to cooperate, and further improves the steering stability during high-speed running.

The land ratio can be determined from the ground contact shape under standardized rim, standardized internal pressure, and standardized load conditions.

Specifically, the tire is mounted on a standardized rim, the standardized internal pressure is applied, and the tire is left at rest for 24 hours at 25°C. Then, the tire tread surface is painted with ink, and the standardized load is applied and pressed against cardboard (camber angle is 0°), and the contact shape is transferred to the cardboard. The tire is rotated 72° in the circumferential direction and the contact shape is transferred at five places. That is, the contact shape is obtained five times. At this time, the parts of the five contact shapes that are interrupted by the grooves in the contour of the contact shape are smoothly connected, and the obtained shape is called the virtual contact surface.

The land ratio can be calculated by (average area of five contact shapes (black portions) transferred to cardboard / average area of virtual contact surfaces obtained from the five contact shapes) ×100(%).

The "standardized internal pressure" refers to the air pressure specified for each tire by the above standard, and in the case of JATMA, it refers to the maximum air pressure, in the case of ETRTO, it refers to the "INFLATION PRESSURE" table, and in the case of TRA, it refers to the maximum value listed in the table "TIRE LOAD LIMITS AT VARIOUS COLD INFLATION PRESSURES". As in the case of "standardized rim", it refers to JATMA, ETRTO, TRA in that order and follows the standards. In the case of a tire not specified in the standard, it refers to the standardized internal pressure (250 KPa or more) of another tire size (specified in the standard) that is specified with the standardized rim as the standard rim. In the case where multiple standardized internal pressures of 250 KPa or more are specified, it refers to the minimum value among them.

The "standardized load" is the load determined for each tire by each standard in the standard system including the standard on which the tire is based, and refers to the maximum mass that can be loaded on the tire. In the case of JATMA, it refers to the maximum load capacity, in the case of ETRTO, it refers to the "LOAD CAPACITY", and in the case of TRA, it refers to the maximum value described in the table "TIRE LOAD LIMITS AT VARIOUS COLD INFLATION PRESSURES". As in the case of the "standardized rim" and "standardized internal pressure" described above, JATMA, ETRTO, and TRA are referred to in that order and their standards are followed. In the case of a tire not determined by a standard, the standardized load $W_L$ is calculated as follows.

$$V = \{(Dt/2)^2 - (Dt/2-Ht)^2\} \times \pi \times Wt$$

$$W_L = 0.000011 \times V + 175$$

$W_L$: Standardized load (kg)
V: Virtual volume of the tire ($mm^3$)
Dt: Tire outer diameter Dt (mm)
Ht: Tire section height (mm)
Wt: Tire section width (mm)

8. Aspect ratio

As described later, the aspect ratio is the cross-sectional height relative to the tire cross-sectional width, and the smaller this ratio is, the smaller the proportion of the portion that deforms in the tire width direction relative to the friction obtained in the tread portion is, and the easier it is to transmit force, so stability and responsiveness are improved during high-speed running, steering is improved, and steering stability during high-speed running is improved. On the other hand, if the aspect ratio is low, the amount of deflection in the side portion is small, which may lead to a deterioration in ride comfort.

Considering these points, in the tire according to the present invention, the specific aspect ratio is preferably 80% or less.

Further, the product of the content (parts by mass) of the filler relative to 100 parts by mass of the rubber component and the aspect ratio is preferably 9900 or less, more preferably 9100 or less, further preferably 8700 or less, further preferably 8300 or less, and further preferably 7900 or less. The lower limit is not particularly limited, but is, for example, 2000 or more. This allows the effect of the silica network to cooperate, and further improves the steering stability during high-speed running.

The aspect ratio (%) can be calculated by the following formula using the tire cross-sectional height Ht (mm),

cross-sectional width Wt (mm), tire outer diameter Dt (mm) when the internal pressure is 250 kPa, and rim diameter R (mm).

$$\text{Aspect ratio (\%)} = (Ht / Wt) \times 100\ (\%)$$

$$Ht = (Dt - R) / 2$$

[3] Embodiments

Hereinafter, the present invention will be described in detail based on the embodiments.

1. Rubber composition

In the tire according to the present invention, the rubber composition forming the cap rubber layer can be obtained by appropriately adjusting the types and amounts of various compounding materials such as the rubber components, fillers, plasticizers, vulcanizing agents and vulcanization accelerators described below.

(1) Mixture of ingredients

(a) Rubber component

In the present invention, the rubber component contains styrene-butadiene rubber (SBR) from the viewpoint of containing styrene in the rubber component, but styrene-based polymers other than SBR, such as styrene-butadiene-styrene block copolymers (SBS) and styrene-butadiene block copolymers (SB), may also be contained.
Rubbers (polymers) generally used in tire production, such as diene-based rubbers including isoprene based rubber, butadiene rubber (BR) and nitrile rubber (NBR), and butyl based rubbers including butyl rubber, may be used in combination with the above-mentioned styrene based polymers. For example, a combination of SBR and BR, or a combination of SBR, BR and isoprene-based rubber is preferred.

(i) SBR

The weight average molecular weight of the SBR is, for example, more than 100,000 and less than 2,000,000. In the present invention, as described above, the amount of styrene in the SBR component is 25% by mass or less. The vinyl content (1,2-bonded butadiene content) of the SBR is, for example, more than 5% by mass and less than 70% by mass. The vinyl content of the SBR refers to the 1,2-bonded butadiene content relative to the total butadiene portion in the SBR component. The structure of the SBR can be identified using, for example, a JNM-ECA series device manufactured by JEOL Ltd
In the present invention, the content of SBR in 100 parts by mass of the rubber component is, as described above, 60 parts by mass or more and 80 parts by mass or less, and more preferably 65 parts by mass or more and 75 parts by mass or less.
There are no particular limit on the SBR, and for example, emulsion-polymerized styrene-butadiene rubber (E-SBR), solution-polymerized styrene-butadiene rubber (S-SBR), and the like can be used. The SBR may be either unmodified SBR or modified SBR. In addition, hydrogenated SBR obtained by hydrogenating the butadiene portion of SBR may be used. The hydrogenated SBR may be obtained by subsequently hydrogenating the BR portion of SBR, or a similar structure may be obtained by copolymerizing styrene, ethylene, and butadiene.
The modified SBR may be any SBR having a functional group that interacts with a filler such as silica, and examples thereof include terminal-modified SBR in which at least one end of the SBR has been modified with a compound (modifying agent) having the functional group (terminal-modified SBR having the functional group at the end), main-chain-modified SBR having the functional group in the main chain, main-chain terminal-modified SBR having the functional group in the main chain and at least one end (for example, SBR having the functional group in the main chain and at least one end modified with the modifying agent), and terminal-modified SBR modified (coupled) with a polyfunctional compound having two or more epoxy groups in the molecule and having a hydroxyl group or epoxy group introduced therein.
Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an

ammonium group, an imide group, a hydrazo group, an azo group, a diazo group, a carboxyl group, a nitrile group, a pyridyl group, an alkoxy group, a hydroxyl group, an oxy group, an epoxy group, and the like. These functional groups may have a substituent.

As the modified SBR, for example, SBR modified with a compound (modifying agent) represented by the following formula can be used.

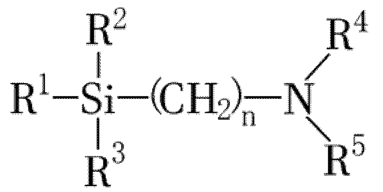

In the formula, $R^1$, $R^2$ and $R^3$ are the same or different and represent an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be bonded to form a ring structure together with the nitrogen atom. "n" represents an integer.

As the modified SBR modified with a compound (modifying agent) represented by the above formula, SBR in which the polymerization terminals (active terminals) of solution-polymerized styrene-butadiene rubber (S-SBR) have been modified with a compound represented by the above formula (such as the modified SBR described in JP-A-2010-111753).

$R^1$, $R^2$ and $R^3$ are preferably alkoxy groups (preferably alkoxy groups having 1 to 8 carbon atoms, more preferably alkoxy groups having 1 to 4 carbon atoms). $R^4$ and $R^5$ are preferably alkyl groups (preferably alkyl groups having 1 to 3 carbon atoms). "n" is preferably 1 to 5, more preferably 2 to 4, and further preferably 3. When $R^4$ and $R^5$ are combined to form a ring structure together with the nitrogen atom, it is preferably a 4- to 8-membered ring. The alkoxy group also includes cycloalkoxy groups (cyclohexyloxy group, and the like) and aryloxy groups (phenoxy group, benzyloxy group, and the like).

Specific examples of the modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more kinds.

As the modified SBR, a modified SBR modified with the following compounds (modifying agents) may also be used. Examples of the modifying agents include polyglycidyl ethers of polyhydric alcohols such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N, N'-diglycidyl-4-glycidyloxyaniline, diglycidyl orthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3-bisaminomethylcyclohexane; amino group-containing acid chlorides such as bis-(1-methylpropyl) carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane, and (3-glycidyloxypropyl)-pentamethyldisiloxane; sulfide group-containing silane compounds such as (trimethylsilyl)[3-(trimethoxysilyl)propyl]sulfide, (trimethylsilyl) [3-(triethoxysilyl) propyl]sulfide, (trimethylsilyl) [3-(tripropoxysilyl)propyl]sulfide, (trimethylsilyl)[3-(tributoxysilyl)propyl] sulfide, (trimethylsilyl) [3-(methyldimethoxysilyl)propyl]sulfide, (trimethylsilyl)[3-(methyldiethoxysilyl)propyl]sulfide, (trimethylsilyl) [3-(methyldipropoxysilyl)propyl]sulfide, and (trimethylsilyl)[3-(methyldibutoxysilyl)propyl]sulfide; N-substituted aziridine compounds such as ethyleneimine and propyleneimine; alkoxysilane such as methyltriethoxysilane, N,N-bis(trimethylsilyl)-3-aminopropyltrimethoxysilane, N,N-bis(trimethylsilyl)-3-aminoethyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-di-t-butylaminobenzophenone, 4-N,N-diphenylaminobenzophenone, 4,4'-N,N-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones, such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones, such as N-methyl-2-piperidone, N-vinyl-2-piperidone, and N-phenyl-2-piperidone; lactams such as N-methyl-e-caprolactam, N-phenyl-e-caprolactam, N-methyl-w-laurylolactam, N-vinyl-ω-laurylolactam, N-methyl-8-propiolactam, and N-phenyl-β-propiolactam; as well as N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethylurea, 1,3-dimethylethyleneurea, 1,3-divinylethyleneurea, 1,3-diethyl-2-imidazolidinone, 1-methyl-3-ethyl-2-imidazolidinone, 4-N,N-dimethylaminoacetophene, 4-N,N-diethylaminoacetophenone, 1,3-bis(diphenylamino)-2-propanone, 1,7-bis(methylethylamino)-4-heptanone, and the like. The modification with the compound (modifying agent) can be carried out by a known method.

As the SBR, for example, SBR manufactured and sold by Sumitomo Chemical Co., Ltd., ENEOS Material Corporation, Asahi Kasei Corporation, Zeon Corporation, etc. may be used. The SBR may be used alone or in combination of two or more kinds.

(ii) BR

In the present invention, the rubber composition may contain BR as necessary. In this case, the content of BR in 100 parts by mass of the rubber component is preferably 10 parts by mass or more and 40 parts by mass or less, and more preferably 15 parts by mass or more and 35 parts by mass or less.

The weight average molecular weight of the BR is, for example, more than 100,000 and less than 2,000,000. The vinyl content of the BR is, for example, more than 1 % by mass and less than 30 % by mass. The cis content of the BR is, for example, more than 1 % by mass and less than 98 % by mass. The trans content of the BR is, for example, more than 1 % by mass and less than 60 % by mass.

The BR is not particularly limited, and may be a BR with a high cis content (cis content of 90% or more), a BR with a low cis content, or a BR containing syndiotactic polybutadiene crystals. The BR may be either unmodified or modified, and the modified BR includes modified BR having the above-mentioned functional group introduced therein. These may be used alone or in combination of two or more. The cis content may be measured by infrared absorption spectroscopy.

As the BR, for example, products of Ube Industries, Ltd., ENEOS Materials Corporation, Asahi Kasei Corporation, Zeon Corporation, etc. can be used.

(iii) Isoprene-based rubber

In the present invention, the rubber composition may contain an isoprene-based rubber as necessary. In this case, the content of the isoprene-based rubber in 100 parts by mass of the rubber component is preferably 3 parts by mass or more and 15 parts by mass or less, and more preferably 5 parts by mass or more and 13 parts by mass or less.

Examples of isoprene-based rubber include natural rubber (NR), isoprene rubber (IR), reformed NR, modified NR, and modified IR.

As the NR, for example, SIR20, RSS#3, TSR20, SVR-L, etc., which are common in the tire industry, can be used. As the IR, there is no particular limitation, and for example, IR2200, etc., which are common in the tire industry can be used. As the reformed NR, deproteinized natural rubber (DPNR), high-purity natural rubber (UPNR), and the like, as the modified NR, epoxidized natural rubber (ENR), hydrogenated natural rubber (HNR), grafted natural rubber, and the like, and as the modified IR, epoxidized isoprene rubber, hydrogenated isoprene rubber, grafted isoprene rubber, and the like can be mentioned. These may be used alone or in combination of two or more kinds.

(iv) Other rubber components

Furthermore, as rubber components other than those mentioned above, rubber (polymer) that is generally used in the manufacture of tires, such as nitrile rubber (NBR), may be included.

(b) Compounding materials other than rubber components

(i) Filler

In the present invention, the rubber composition contains silica as a filler as described above, but may contain other fillers. Specific examples of fillers other than silica include carbon black, graphite, calcium carbonate, talc, alumina, clay, aluminum hydroxide, and mica.

(i-1) Silica

In the present invention, the content of silica is 100 parts by mass or more relative to 100 parts by mass of the rubber component. As described above, the content is more preferably 110 parts by mass or more, and further preferably

120 parts by mass or more. The upper limit is preferably 150 parts by mass or less, more preferably 140 parts by mass or less, and further preferably 130 parts by mass or less.

In the present invention, the BET specific surface area of the silica contained in the rubber composition is preferably more than 140 $m^2$/g from the viewpoint of obtaining good durability performance, more preferably more than 160 $m^2$/g, and further preferably more than 180 $m^2$/g of finely divided silica. On the other hand, from the viewpoint of obtaining good rolling resistance during high-speed running, it is preferably less than 250 $m^2$/g, more preferably less than 230 $m^2$/g, and further preferably less than 300 $m^2$/g. The BET specific surface area is the value of $N_2$ SA measured by the BET method in accordance with ASTM D3037-93.

In the present invention, as described above, it is preferable to use silica having a particle size of 17 nm or less in the rubber composition. By using silica having a small particle size, the frequency of contact with the polymer (styrene domain) can be increased, thereby improving the reinforcement. The lower limit is not particularly limited, but is preferably 10 nm or more from the viewpoint of dispersibility during mixing.

Examples of silica include dry silica (anhydrous silica) and wet silica (hydrous silica). Among them, wet silica is preferable because it has large number of silanol groups. In addition, silica made from hydrated glass or silica made from biomass materials such as rice husk may also be used.

As the silica, for example, products of Evonik, Degussa, Rhodia, Tosoh Silica Co., Ltd., Solvay Japan Co., Ltd., Tokuyama Corporation, etc. can be used.

(i-2) Silane coupling agent

The rubber composition of the present invention preferably contains a silane coupling agent together with silica.

The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

As the silane coupling agent, for example, products available from Evonik Industries, Momentive Corporation, Shin-Etsu Silicones Co. Ltd., Tokyo Chemical Industry Co. Ltd., Azumax Co. Ltd., Dow Corning Toray Co. Ltd., etc. can be used.

The content of the silane coupling agent is, for example, more than 3 parts by mass and less than 25 parts by mass relative to 100 parts by mass of silica.

(i-3) Carbon black

In the present invention, the rubber composition preferably contains carbon black from the viewpoint of reinforcement.

The specific content ratio of carbon black per 100 parts by mass of the rubber component is preferably 2 parts by mass or more, and more preferably 4 parts by mass or more. On the other hand, it is preferably 20 parts by mass or less, and more preferably 15 parts by mass or less.

The carbon black is not particularly limited, and examples thereof includes furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FT and MT; and channel black (channel carbon black) such as EPC, MPC and CC. These may be used alone or in combination of two or more.

The CTAB specific surface area (Cetyl Tri-methyl Ammonium Bromide) of the carbon black is preferably 130 $m^2$/g or more, more preferably 160 $m^2$/g or more, and further preferably 170 $m^2$/g or more. On the other hand, it is preferably 250

$m^2/g$ or less, and more preferably 200 $m^2/g$ or less. The CTAB specific surface area is a value measured in accordance with ASTM D3765-92.

The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(i-4) Other fillers

In addition to the above-mentioned silica and carbon black, the rubber composition may further contain, as necessary, fillers commonly used in the tire industry, such as graphite, calcium carbonate, talc, alumina, clay, aluminum hydroxide, mica, etc. The content of these fillers is, for example, more than 0.1 part by mass and less than 200 parts by mass per 100 parts by mass of the rubber component.

(ii) Plasticizer components

The rubber composition may contain oil (including extender oil), liquid rubber, and resin as plasticizer components that soften rubber. The plasticizer components are components that can be extracted from vulcanized rubber with acetone. The total content of the plasticizer components is preferably 55 parts by mass or more, more preferably 65 parts by mass or more, and further preferably 75 parts by mass or more, relative to 100 parts by mass of the rubber component. On the other hand, it is preferably 90 parts by mass or less, more preferably 85 parts by mass or less, and further preferably 80 parts by mass or less. When the rubber component is an oil-extended rubber component, the amount of the oil-extended oil is included in the oil content.

(ii-1) Oil

Examples of the oil include mineral oil (generally called process oil), vegetable oil, and mixtures thereof. As the mineral oil (process oil), paraffin-based process oils, aromatic process oils, naphthene -based process oils, and the like can be used. Examples of vegetable oils include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combination of two or more. From the viewpoint of life cycle assessment, waste oils used as lubricants in rubber mixers and automobile engines, waste edible oils, etc. may be used as appropriate.

Specific examples of process oils (mineral oils) include products from Idemitsu Kosan Co., Ltd., Sankyo Yuka Industry Co., Ltd., ENEOS Corporation, Orisoi Corporation, H&R Corporation, Toyokuni Oil Mills Co., Ltd., Showa Shell Sekiyu Co., Ltd., Fuji Kosan Co., Ltd., etc.

(ii-2) Liquid rubber

The liquid rubber mentioned as a plasticizer is a polymer in a liquid state at room temperature (25°C) and is a rubber component that can be extracted by acetone extraction from a vulcanized tire. Examples of the liquid rubber include farnesene-based polymers, liquid diene-based polymers, and hydrogenated products thereof.

The farnesene-based polymer is a polymer obtained by polymerizing farnesene, and has a structural unit based on farnesene. Farnesene includes isomers such as $\alpha$-farnesene ((3E, 7E) -3,7,11-trimethyl-1,3,6,10-dodecatetraene) and $\beta$-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-converted weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd., etc. can be used.

(ii-3) Resin Component

The resin component also functions as a tackifier and may be solid or liquid at room temperature. Specific examples of the resin component include rosin-based resin, styrene-based resin, coumarone-based resin, terpene-based resin, C5 resin, C9 resin, C5C9 resin, and acrylic resin, and two or more of them may be used in combination. The content of the resin component is preferably more than 2 parts by mass and less than 45 parts by mass relative to 100 parts by mass of the rubber component. These resin components may be provided with a modified group capable of reacting with silica or the like, as necessary.

Rosin-based resins are resins whose main component is rosin acid obtained by processing pine resin. These rosin resins (rosins) can be classified according to whether they are modified or not, and can be classified into unmodified rosin (non-modified rosin) and modified rosin (rosin derivatives). Examples of unmodified rosins include tall rosin (also known as tall oil rosin), gum rosin, wood rosin, disproportionated rosin, polymerized rosin, hydrogenated rosin, and other chemically modified rosins. Modified rosin is a modification of unmodified rosin, and examples of such modifications include rosin esters, unsaturated carboxylic acid modified rosins, unsaturated carboxylic acid modified rosin esters, rosin amide compounds, and rosin amine salts.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The C5 resin refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The C9 resin refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene or styrene or a copolymer of α-methylstyrene and styrene is preferable because it is economical, easy to process, and excellent in heat generation. A copolymer of α-methylstyrene and styrene is more preferred. As the aromatic vinyl-based resin, for example, those commercially available from Clayton, Eastman Chemical, etc. can be used.

The C5C9 resin refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, specifically, for example, a product of Maruzen Petrochemical Co., Ltd., Sumitomo Bakelite Co., Ltd., Yasuhara Chemical Co., Ltd., Tosoh Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., ENEOS Corporation, Arakawa Chemical Industry Co., Ltd., Taoka Chemical Industry Co., Ltd. can be used.

(iii) Stearic acid

In the present invention, the rubber composition preferably contains stearic acid. The content of stearic acid is, for example, more than 0.5 parts by mass and less than 10.0 parts by mass per 100 parts by mass of the rubber component. As the stearic acid, a conventionally known product can be used. For example, a product of NOF Corporation, NOF Corporation, Kao Corporation, FUJIFILM Wako Pure Chemical Industries, Ltd., Chiba Fatty Acid Co., Ltd., etc. can be used.

(iv) Anti-aging agents

In the present invention, from the viewpoint of preventing rubber aging, the rubber composition preferably contains an anti-aging agent. The content of the anti-aging agent is, for example, more than 0.5 parts by mass and less than 10 parts by mass, and more preferably 1 part by mass or more, relative to 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(v) Wax

In the present invention, the rubber composition preferably contains a wax. The content of the wax per 100 parts by mass of the rubber component is, for example, 0.5 to 20 parts by mass, preferably 1.0 to 15 parts by mass, and more preferably 1.5 to 10 parts by mass.
The wax is not particularly limited, and examples thereof include petroleum waxes such as paraffin wax and microcrystalline wax; natural waxes such as vegetable wax and animal wax; synthetic waxes such as polymers of ethylene, propylene, etc. These may be used alone or in combination of two or more kinds.
As the wax, for example, products available from Ouchi Shinko Chemical Industry Co., Ltd., Nippon Seiro Co., Ltd., Seiko Chemical Co., Ltd., etc. can be used.

(vi) Zinc oxide

The rubber composition may contain zinc oxide. The content of zinc oxide is, for example, more than 0.5 parts by mass and less than 10 parts by mass with respect to 100 parts by mass of the rubber component. As the zinc oxide, a conventionally known product can be used, and for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

(vii) Crosslinking agents and vulcanization accelerators

In the present invention, the rubber composition preferably contains a crosslinking agent such as sulfur. The content of the crosslinking agent is, for example, more than 0.1 parts by mass and less than 10.0 parts by mass per 100 parts by mass of the rubber component.
Examples of sulfur include powdered sulfur, precipitated sulfur, colloidal sulfur, insoluble sulfur, highly dispersible sulfur, soluble sulfur, etc., which are commonly used in the rubber industry. These may be used alone or in combination of two or more kinds.
As the sulfur, for example, products available from Tsurumi Chemical Industry Co., Ltd., Karuizawa Sulfur Co., Ltd., Shikoku Chemical Industry Co., Ltd., Flexsys Corporation, Nippon Kanryu Kogyo Co., Ltd., Hosoi Chemical Industry Co., Ltd., etc. can be used.
Examples of crosslinking agents other than sulfur include vulcanizing agents containing sulfur atoms, such as Tackirol V200 manufactured by Taoka Chemical Co., Ltd. and KA9188 (1,6-bis (N,N' - dibenzylthiocarbamoyldithio) hexane) manufactured by LANXESS AG, and organic peroxides, such as dicumyl peroxide.
The rubber composition preferably contains a vulcanization accelerator to promote crosslinking. The content of the vulcanization accelerator per 100 parts by mass of the rubber component is, for example, more than 0.3 parts by mass and less than 10.0 parts by mass.
Examples of the vulcanization accelerator include thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenyl guanidine, diorthotolyl guanidine, and orthotolyl biguanidine. These may be used alone or in combination of two or more.

(viii) Other

In addition to the above components, the rubber composition may further contain additives commonly used in the tire industry, such as fatty acid metal salts, carboxylate metal salts, organic peroxides, reversion inhibitors, etc., as necessary. The content of these additives is, for example, more than 0.1 parts by mass and less than 200 parts by mass per 100 parts by mass of the rubber component.

(2) Preparation of rubber composition

The rubber composition that forms the cap rubber layer is prepared by appropriately adjusting the various compounding materials described above and using a general method, such as a manufacturing method including a base kneading process in which the rubber component is kneaded with a filler such as silica, and a finish kneading process in which the kneaded product obtained in the base kneading process is kneaded with a crosslinking agent.
The kneading can be carried out using a known (internal) kneading machine such as a Banbury mixer, a kneader, or an open roll.

The kneading temperature in the base kneading step is, for example, higher than 50°C and lower than 200°C, and the kneading time is, for example, longer than 30 seconds and shorter than 30 minutes. In the base kneading step, in addition to the above-mentioned components, compounding agents conventionally used in the rubber industry, for example, plasticizer components such as oil, zinc oxide, anti-aging agents, waxes, vulcanization accelerators, etc., may be appropriately added and kneaded as necessary.

In the finish kneading step, the kneaded product obtained in the base kneading step is kneaded with a crosslinking agent. The kneading temperature in the finish kneading step is, for example, higher than room temperature and lower than 80°C, and the kneading time is, for example, longer than 1 minute and shorter than 15 minutes. In the finish kneading step, in addition to the above components, a vulcanization accelerator, zinc oxide, etc. may be appropriately added and kneaded as necessary.

2. Tire manufacturing

The tire according to the present invention can be produced as an unvulcanized tire by molding the rubber composition obtained as described above into a tread rubber of a predetermined shape as a cap rubber layer, and then molding it together with other tire members in a normal manner on a tire building machine.

In the case where the tread portion has a multi-layer structure with a base rubber layer, the rubber composition for forming the base rubber layer can be obtained by kneading the above-mentioned rubber components and compounding materials in the same manner while appropriately changing the compounding amounts. Then, the rubber composition for forming the base rubber layer is extruded together with the cap rubber layer to form a tread rubber of a predetermined shape, and then molded together with other tire members in a normal manner on a tire building machine to produce an unvulcanized tire.

Specifically, on the molded drum, the inner liner as a member to ensure the air-tightness of the tire, the carcass as a member to withstand the load, impact and filling air pressure received by the tire, the belt member as a member to strongly tighten the carcass to increase the rigidity of the tread, and the like are wound, both ends of the carcass are fixed to both side edges, a bead part as a member for fixing the tire to the rim is arranged, and they are formed into a toroid shape. Then the tread is pasted on the center of the outer circumference, and a sidewall is pasted to the radially outer side to form the side portion, thereby producing an unvulcanized tire.

The unvulcanized tire thus produced is then heated and pressurized in a vulcanizer to obtain a tire. The vulcanization step can be carried out by applying a known vulcanization method. The vulcanization temperature is, for example, higher than 120°C and lower than 200°C, and the vulcanization time is, for example, longer than 5 minutes and shorter than 15 minutes.

As described above, the resulting tire can sufficiently improve steering stability during high-speed running due to the combination of the following advantages: improved grip performance achieved by road surface conformance, heat generation due to friction in the domains, generation of energy loss, and heating the tread surface and inside, and the like as well as the ease of obtaining reaction force due to the short force transmission distance.

The tire according to the present invention is not particularly limited in category and can be used as a passenger car tire, a tire for heavy load vehicles such as trucks and buses, a two-wheeled vehicle tire, a run-flat tire, a non-pneumatic tire, etc., but is preferably a passenger car tire. Also, it is preferably a pneumatic tire.

[EXAMPLES]

Examples (working examples) that are considered to be preferable for carrying out the present invention are shown below, but the scope of the present invention is not limited to these working examples. In the working examples, a pneumatic tire (tire size 195/65R15 (aspect ratio: 65%, land ratio: 65%)) manufactured from a composition obtained by varying the formulation according to each table using various chemicals shown below was examined, and the results calculated based on the following evaluation method are shown in Tables 2 and 3.

1. Rubber composition for forming the cap rubber layer

(1) Ingredients

(a) Rubber component

(i) NR: TSR20
(ii) SBR-1: SLR6430 (S-SBR) manufactured by Trinseo Corporation (styrene content: 40% by mass, vinyl content:

24% by mass, 37.5% oil extended product)

(iii) SBR-2: Modified S-SBR obtained by the method shown in the next paragraph. (styrene content: 25% by mass, vinyl content: 27% by mass)

(iv) SBR-3: HPR840 manufactured by ENEOS Material Co., Ltd. (S-SBR) (styrene content: 10% by mass, vinyl content: 42% by mass)

(v) BR: Ubepol BR150B (Hicis BR) manufactured by Ube Industries, Ltd. (cis content 97% by mass, trans content 2% by mass, vinyl content 1% by mass)

(Production of SBR-2)

The SBR-2 is prepared according to the following procedure. First, two autoclaves with an internal volume of 10 L, an inlet at the bottom and an outlet at the top, and equipped with a stirrer and a jacket are connected in series as reactors, and butadiene, styrene, and cyclohexane are mixed in a predetermined ratio. This mixed solution is passed through a dehydration column filled with activated alumina, mixed with n-butyllithium in a static mixer to remove impurities, and then continuously fed from the bottom of the first reactor. Further 2,2-bis(2-oxolanyl)propane as a polar substance and n-butyllithium as a polymerization initiator are continuously fed from the bottom of the first reactor at a predetermined rate, respectively, and the temperature inside the reactor is maintained at 95°C. The polymer solution is continuously withdrawn from the head of the reactor and fed to the second reactor. The temperature of the second reactor is kept at 95°C, and a mixture of tetraglycidyl-1,3-bisaminomethylcyclohexane (monomer) as a modifying agent and an oligomer component is continuously added as a 1000-fold diluted solution of cyclohexane at a predetermined rate to carry out a modification reaction. This polymer solution is continuously withdrawn from the reactor, and an antioxidant is continuously added using a static mixer. After which the solvent is removed to obtain the desired modified diene polymer (SBR-2).

The vinyl content (unit: % by mass) of the SBR-2 is determined by infrared spectroscopy from the absorption intensity at about 910 $cm^{-1}$, which is the absorption peak of the vinyl group, and the styrene content (unit: % by mass) is determined from the refractive index in accordance with JIS K6383 (1995).

(b) Compounding materials other than rubber components

(i) Carbon black: Diablack N220 manufactured by Mitsubishi Chemical Corporation ($N_2SA$: 115 $m^2/g$)

(ii) Silica: Ultrasil VN3 manufactured by Evonik Industries Corporation ($N_2SA$: 175 $m^2/g$, average primary particle diameter: 15 nm)

(iii) Oil: VIVATEC 500 (TDAE oil) manufactured by H&R Corporation

(iv) Silane coupling agent: Si266 manufactured by Evonik Industries Corporation (Bis(3-triethoxysilylpropyl)disulfide)

(v) Resin: SYLVATRAXX4401 manufactured by Arizona Chemical Company ($\alpha$-Methylstyrene Resin)

(vi) Zinc oxide: Zinc oxide type 2 manufactured by Mitsui Mining & Smelting Co., Ltd.

(vii) Stearic acid: Bead stearic acid "Tsubaki" manufactured by NOF Corporation

(viii) Wax: Sannok (selected special wax) manufactured by Ouchi Shinko Chemical Industry Co., Ltd.

(ix) Anti-aging agent-1: Antigen 6C manufactured by Sumitomo Chemical Co., Ltd. (N-(1,3-dimethylbutyl)-N'-phenyl-p-phenylenediamine)

(x) Anti-aging agent-2: Antigen RD manufactured by Sumitomo Chemical Co., Ltd. (2,2,4-trimethyl-1,2-dihydroquinoline polymer)

(xi) Sulfur: Powdered sulfur (containing 5% oil) manufactured by Tsurumi Chemical Industry Co., Ltd.

(xii) Vulcanization accelerator-1: Nocceler CZ manufactured by Ouchi Shinko Chemical Industry Co., Ltd. (N-cyclohexyl-2-benzothiazylsulfenamide (CBS))

(xiii) Vulcanization accelerator-2: Soxinol D manufactured by Sumitomo Chemical Co., Ltd. (N,N'-diphenylguanidine (DPG))

(2) Rubber composition for forming the cap rubber layer

According to the respective compounding contents shown in Tables 2 and 3, materials other than sulfur and vulcanization accelerator are kneaded for 5 minutes under the condition of 150°C using a Banbury mixer to obtain a kneaded product. Each blending amount is in parts by mass.

Next, sulfur and a vulcanization accelerator are added to the obtained kneaded product, and the mixture is kneaded for 5 minutes under the condition of 80°C using an open roll to obtain a rubber composition for forming the cap rubber layer.

2. Preparation of the rubber composition for forming the base rubber layer

In parallel, a rubber composition for forming the base rubber layer is obtained based on the formulation shown in Table 1 in the same manner as in the production of the rubber composition for forming the cap rubber layer.

[Table 1]

| Mixture of ingredients | Formulation (parts bv weight) |
|---|---|
| NR (TSR20) | 70 |
| BR (UBEPOL-BR150B manufactured by Ube Industries, Ltd.) | 30 |
| Carbon black (Cabot Japan Co., Ltd.'s Show Black N330T) | 35 |
| Stearic acid ("Tsubaki" stearic acid, manufactured by NOF Corporation) | 2 |
| Zinc oxide (Zinc oxide No. 1 manufactured by Mitsui Mining & Smelting Co., Ltd.) | 4 |
| Wax (Sannok Wax manufactured by Ouchi Shinko Chemical Co., Ltd. ) | 2 |
| Anti-aging agent (Nocrac 6C manufactured by Ouchi Shinko Chemical Industry Co., Ltd.) | 3 |
| Anti-aging agent (Antage RD manufactured by Kawaguchi Chemical Industry Co., Ltd.) | 1 |
| Sulfur (powdered sulfur manufactured by Tsurumi Chemical Industry Co., Ltd.) | 1.7 |
| Vulcanization accelerator (Nocceler CZ-G manufactured by Ouchi Shinko Chemical Industry Co., Ltd.) | 1.2 |

3. Pneumatic tires

Each rubber composition is extruded in a predetermined shape so that the (cap rubber layer/base rubber layer) ratio becomes 8/2, to form a tread portion having the thickness shown in Tables 2 and 3.

Thereafter, the tire is pasted together with other tire members to form an unvulcanized tire, and the tire is press-vulcanized for 10 minutes under a condition of 170°C to produce each of the pneumatic tires (test tires) of Examples 1 to 10 and Comparative Examples 1 to 5 shown in Tables 2 and 3.

4. Calculation of parameters

The following parameters are then determined for each test tire:

(1) 30°C tan $\delta$

A rubber test piece for measuring viscoelasticity was prepared by cutting out a piece of rubber of 20 mm length$\times$4 mm width$\times$2 mm thickness from the cap rubber layer of the tread portion of each test tire, with the long side in the tire circumferential direction. Then, the 30°Ctan $\delta$ for each rubber test piece was measured using "Eplexor" series manufactured by GABO under the conditions of measurement temperature 30°C, frequency 10 Hz, initial strain 5%, dynamic strain 1%, and deformation mode: tensile.

The 30°C tan $\delta$ of the base rubber layer was set to 0.07.

(2) 0°C tan $\delta$

The 0°C tan $\delta$ of the cap rubber layer is measured under the same conditions as above, except that the temperature is changed to 0°C.

Next, $\alpha$ (= 0°C tan $\delta$ + 3 $\times$ 30°C tan $\delta$) is calculated using 0°C tan $\delta$ and 30°C tan $\delta$ of the obtained cap rubber layer. In addition, $\beta$ (= 30°C tan $\delta$ / G) is calculated using the thickness G (mm) and 30°C tan $\delta$ of the cap rubber layer.

(3) AE

Using a vulcanized rubber test piece cut out from the cap rubber layer of the tread portion of each test tire, the AE (% by mass) is determined in accordance with JIS K 6229:2015.

(4) (SBR content × land ratio), (silica content × aspect ratio)

Additionally, (SBR content (parts by mass) × land ratio (%)) and (silica content (parts by mass) × aspect ratio (%)) are calculated based on the specifications and compounding contents of each test tire.

5. Performance evaluation test (steering stability at high-speeds running)

Each test tire is installed to all wheels of a vehicle (a domestic FF vehicle with an engine displacement of 2000cc), and the tire is filled with air so that the internal pressure is 250 kPa (the standardized internal pressure for a passenger car). After a break-in run on a test course with a dry road surface, the vehicle is run at approximately 120 km/h, and 20 drivers each perform a sensory evaluation on a 5-point scale (the higher the number, the better) of the stability of control during steering. The total score of the evaluations by the 20 drivers is then calculated.

Next, the result of Comparative Example 4 was set as 100 and indexed according to the following formula to evaluate the steering stability during high-speed running. A larger value indicates better steering stability during high-speed running.

$$\text{Stability during high-speed running} = [(\text{Test tire results}) / (\text{Comparative example 4 results})] \times 100$$

[Table 2]

| Example No. | Example | | | | | | | |
|---|---|---|---|---|---|---|---|---|
| | 1 | 2 | 3 | 4 | 5 | 6 | 7 | 8 |
| Cap rubber layer composition | | | | | | | | |
| N.R. | 10 | 10 | 10 | 10 | 10 | 10 | 10 | - |
| SBR-1 | - | - | - | - | - | - | - | - |
| SBR-2 | 70 | 70 | 70 | 70 | 70 | 70 | 70 | 60 |
| SBR-3 | - | - | - | - | - | - | - | - |
| B.R. | 20 | 20 | 20 | 20 | 20 | 20 | 20 | 40 |
| Carbon Black | 5 | 5 | 5 | 5 | 5 | 5 | 5 | 5 |
| silica | 100 | 120 | 110 | 130 | 100 | 100 | 130 | 100 |
| oil | 27.5 | 57.5 | 42.5 | 52.5 | 27.5 | 27.5 | 52.5 | 30 |
| Silane Coupling Agent | 8 | 9.6 | 8.8 | 10.4 | 8 | 8 | 10.4 | 8 |
| resin | 30 | 10 | 20 | 25 | 30 | 30 | 25 | 30 |
| Zinc oxide | 3 | 3 | 3 | 3 | 3 | 3 | 3 | 3 |
| Stearic acid | 2 | 2 | 2 | 2 | 2 | 2 | 2 | 2 |
| wax | 1.5 | 1.5 | 1.5 | 1.5 | 1.5 | 1.5 | 1.5 | 1.5 |
| Anti-aging agent-1 | 2 | 2 | 2 | 2 | 2 | 2 | 2 | 2 |
| Anti-aging agent-2 | 1 | 1 | 1 | 1 | 1 | 1 | 1 | 1 |
| sulfur | 1.5 | 1.5 | 1.5 | 1.5 | 1.5 | 1.5 | 1.5 | 1.5 |
| Vulcanization accelerator-1 | 2 | 2 | 2 | 2 | 2 | 2 | 2 | 2 |
| Vulcanization accelerator-2 | 2.5 | 2.8 | 2.7 | 3.0 | 2.5 | 2.5 | 3.0 | 2.5 |
| Parameters | | | | | | | | |
| 30°C tan δ | 0.27 | 0.27 | 0.27 | 0.33 | 0.27 | 0.27 | 0.33 | 0.28 |
| 0°C tan δ | 0.55 | 0.38 | 0.47 | 0.56 | 0.55 | 0.55 | 0.56 | 0.53 |

(continued)

| Example No. | Example | | | | | | | |
|---|---|---|---|---|---|---|---|---|
| | 1 | 2 | 3 | 4 | 5 | 6 | 7 | 8 |
| Tread thickness G(mm) | 12 | 12 | 12 | 12 | 9 | 6 | 6 | 9 |
| AE (% by mass) | 23.7 | 24.6 | 24.2 | 26.0 | 23.7 | 23.7 | 26.0 | 24.3 |
| $\alpha$ | 1.36 | 1.19 | 1.28 | 1.55 | 1.36 | 1.36 | 1.55 | 1.37 |
| $\beta$ | 0.023 | 0.023 | 0.023 | 0.028 | 0.030 | 0.045 | 0.055 | 0.031 |
| SBR content × land ratio | 4550 | 4550 | 4550 | 4550 | 4550 | 4550 | 4550 | 3900 |
| Silica content × aspect ratio | 6500 | 7800 | 7150 | 8450 | 6500 | 6500 | 8450 | 6500 |
| Performance evaluation | | | | | | | | |
| Steering stability after high-speed running | 112 | 103 | 105 | 119 | 116 | 122 | 129 | 115 |

[Table 3]

| Example No. or Comparative Example No. | Example | | Comparative Example | | | | |
|---|---|---|---|---|---|---|---|
| | 9 | 10 | 1 | 2 | 3 | 4 | 5 |
| Cap rubber layer composition | | | | | | | |
| N.R. | - | - | 10 | 10 | 10 | 10 | 10 |
| SBR-1 | - | - | 96.25 | - | 96.25 | 96.25 | 96.25 |
| (Rubber) | - | - | (70) | - | (70) | (70) | (70) |
| (extended oil content) | - | - | (26.25) | - | (26.25) | (26.25) | (26.25) |
| SBR-2 | 80 | - | - | 70 | - | - | - |
| SBR-3 | - | 80 | - | - | - | - | - |
| B.R. | 20 | 20 | 20 | 20 | 20 | 20 | 20 |
| Carbon Black | 5 | 5 | 5 | 5 | 5 | 5 | 5 |
| silica | 100 | 100 | 85 | 85 | 100 | 90 | 85 |
| oil | 30 | 20 | 15 | 22.5 | 30 | - | 15 |
| Silane Coupling Agent | 8 | 8 | 6.8 | 6.8 | 8 | 7.2 | 6.8 |
| resin | 30 | 40 | - | 20 | - | 25 | - |
| Zinc oxide | 3 | 3 | 3 | 3 | 3 | 3 | 3 |
| Stearic acid | 2 | 2 | 2 | 2 | 2 | 2 | 2 |
| wax | 1.5 | 1.5 | 1.5 | 1.5 | 1.5 | 1.5 | 1.5 |
| Anti-aging agent-1 | 2 | 2 | 2 | 2 | 2 | 2 | 2 |
| Anti-aging agent-2 | 1 | 1 | 1 | 1 | 1 | 1 | 1 |
| sulfur | 1.5 | 1.5 | 1.5 | 1.5 | 1.5 | 1.5 | 1.5 |
| Vulcanization accelerator-1 | 2 | 2 | 2 | 2 | 2 | 2 | 2 |
| Vulcanization accelerator-2 | 2.5 | 2.5 | 2.2 | 2.2 | 2.5 | 2.3 | 2.2 |
| Parameters | | | | | | | |
| 30°C tan $\delta$ | 0.27 | 0.28 | 0.23 | 0.23 | 0.26 | 0.30 | 0.23 |
| 0°C tan $\delta$ | 0.56 | 0.52 | 0.50 | 0.45 | 0.50 | 0.80 | 0.50 |
| Tread thickness G(mm) | 9 | 9 | 14 | 14 | 14 | 14 | 12 |
| AE (% by mass) | 24.3 | 24.6 | 20.3 | 20.7 | 23.4 | 22.8 | 20.3 |

(continued)

| Example No. or Comparative Example No. | Example | | Comparative Example | | | | |
|---|---|---|---|---|---|---|---|
| | 9 | 10 | 1 | 2 | 3 | 4 | 5 |
| α | 1.37 | 1.36 | 1.19 | 1.14 | 1.28 | 1.70 | 1.19 |
| β | 0.030 | 0.030 | 0.016 | 0.016 | 0.019 | 0.021 | 0.019 |
| SBR content × land ratio | 5200 | 5200 | 4550 | 4550 | 4550 | 4550 | 4550 |
| Silica content × aspect ratio | 6500 | 6500 | 5525 | 5525 | 6500 | 5850 | 5525 |
| Performance evaluation | | | | | | | |
| Steering stability after high-speed running | 118 | 122 | 95 | 98 | 97 | 100 | 99 |

Although the present invention has been described above based on the embodiment, the present invention is not limited to the above embodiment. Various modifications can be made to the above embodiment within the same and equivalent scope of the present invention.

The present invention (1) is

a tire having a tread portion, wherein
a cap rubber layer forming the tread portion is formed from a rubber composition containing a rubber component which contains
a styrene-butadiene rubber (SBR) having a styrene content of 25% by mass or less in an amount of 60 parts by mass or more and 80 parts by mass or less in 100 parts by mass of the rubber component, and 100 parts by mass or more of silica relative to 100 parts by mass of the rubber component;
the rubber composition has a loss tangent (30°C tan δ) measured under the conditions of a temperature of 30°C, a frequency of 10 Hz, an initial strain of 5%, and a dynamic strain rate of 1%, in a deformation mode of tension of 0.27 or more; and
the thickness of the tread portion is 13 mm or less.

The present invention (2) is
the tire according to the present invention (1), wherein the styrene amount in the styrene-butadiene rubber (SBR) is 20 % by mass or less.

The present invention (3) is
the tire according to the present invention (2), wherein the styrene amount in the styrene-butadiene rubber (SBR) is 15 % by mass or less.

The present invention (4) is
the tire of any combination of the present inventions (1) to (3), wherein the 30°C tan δ is 0.30 or more.

The present invention (5) is
the tire of any combination of the present inventions (1) to (4), wherein the thickness of the tread portion is 10 mm or less.

The present invention (6) is
the tire of any combination of the present inventions (1) to (5), wherein regard the cap rubber layer, α in the following formula (1), which shows the relationship between the loss tangent (0°C tan δ) and the 30°C tan δ, measured under the conditions of a temperature of 0°C, a frequency of 10 Hz, an initial strain of 5%, and a dynamic strain rate of 1%, in a deformation mode of tension, is 1.2 or more:

$$\alpha = 0℃\tan\delta + 3 \times 30℃\tan\delta \qquad (1).$$

The present invention (7) is
the tire according to the present invention (6), wherein the α is 1.35 or more.

The present invention (8) is
the tire of any combination of the present inventions (1) to (7), wherein β in the following formula (2) showing the relationship between the 30°C tan δ and the thickness G (mm) of the tread portion is 0.027 or more:

$$\beta = 30℃\tan\delta / G \qquad (2).$$

The present invention (9) is

the tire according to the present invention (8), wherein the β is 0.030 or more.

The present invention (10) is

the tire of any combination of the present inventions (1) to (9), wherein a thickness of the cap rubber layer occupies 10% or more of the entire tread portion.

The present invention (11) is

the tire of any combination of the present inventions (1) to (10), wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 6,400 or less.

The present invention (12) is

the tire of any combination of the present inventions (1) to (11), wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 6,000 or less.

The present invention (13) is

the tire of any combination of the present inventions (1) to (12), wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 5,600 or less.

The present invention (14) is

the tire of any combination of the present inventions (1) to (13), wherein the aspect ratio is 80% or less, and the product of the content (parts by mass) of the silica relative to 100 parts by mass of the rubber component and the aspect ratio is 9,900 or less.

The present invention (15) is

the tire of any combination of the present inventions (1) to (14), wherein the aspect ratio is 80% or less, and the product of the content (parts by mass) of the silica relative to 100 parts by mass of the rubber component and the aspect ratio is 9,100 or less.

## Claims

1. A tire having a tread portion, wherein

    a cap rubber layer forming the tread portion is formed from a rubber composition containing a rubber component which contains

    a styrene-butadiene rubber (SBR) having a styrene content of 25% by mass or less in an amount of 60 parts by mass or more and 80 parts by mass or less in 100 parts by mass of the rubber component, and 100 parts by mass or more of silica relative to 100 parts by mass of the rubber component;

    the rubber composition has a loss tangent (30°C tan δ) measured under the conditions of a temperature of 30°C, a frequency of 10 Hz, an initial strain of 5%, and a dynamic strain rate of 1%, in a deformation mode of tension of 0.27 or more; and

    the thickness of the tread portion is 13 mm or less.

2. The tire according to claim 1, wherein the styrene amount in the styrene-butadiene rubber (SBR) is 20 % by mass or less.

3. The tire according to claim 2, wherein the styrene amount in the styrene-butadiene rubber (SBR) is 15 % by mass or less.

4. The tire according to any one of claims 1-3, wherein the 30°C tan δ is 0.30 or more.

5. The tire according to any one of claims 1-4, wherein the thickness of the tread portion is 10 mm or less.

6. The tire according to any one of claims 1-5, wherein, regarding the cap rubber layer, α in the following formula (1), which shows the relationship between the loss tangent (0°C tan δ) and the 30°C tan δ, measured under the conditions of a temperature of 0°C, a frequency of 10 Hz, an initial strain of 5%, and a dynamic strain rate of 1%, in a deformation mode of tension, is 1.2 or more:

$$\alpha = 0^{\circ}C\tan\delta + 3 \times 30^{\circ}C\tan\delta \qquad (1).$$

7. The tire according to claim 6, wherein the $\alpha$ is 1.35 or more.

8. The tire according to any one of claims 1-7, wherein $\beta$ in the following formula (2) showing the relationship between the 30°C tan $\delta$ and the thickness G (mm) of the tread portion is 0.027 or more:

$$\beta = 30^{\circ}\mathrm{C}\tan\delta / G \qquad (2).$$

9. The tire according to claim 8, wherein the $\beta$ is 0.030 or more.

10. The tire according to any one of claims 1-9, wherein a thickness of the cap rubber layer occupies 10% or more of the entire tread portion.

11. The tire according to any one of claims 1-10, wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 6,400 or less.

12. The tire according to any one of claims 1-11, wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 6,000 or less.

13. The tire according to any one of claims 1-12, wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 5,600 or less.

14. The tire according to any one of claims 1-13, wherein the aspect ratio is 80% or less, and the product of the content (parts by mass) of the silica relative to 100 parts by mass of the rubber component and the aspect ratio is 9,900 or less.

15. The tire according to any one of claims 1-14, wherein the aspect ratio is 80% or less, and the product of the content (parts by mass) of the silica relative to 100 parts by mass of the rubber component and the aspect ratio is 9,100 or less.

**INTERNATIONAL SEARCH REPORT**

International application No.
**PCT/JP2023/016409**

**A. CLASSIFICATION OF SUBJECT MATTER**

***B60C 11/00***(2006.01)i; ***B60C 1/00***(2006.01)i; ***B60C 11/03***(2006.01)i; ***C08F 236/10***(2006.01)i; ***C08K 3/04***(2006.01)i; ***C08K 3/36***(2006.01)i; ***C08L 9/06***(2006.01)i
FI: B60C11/00 D; B60C1/00 A; B60C11/00 B; B60C11/03 Z; B60C11/00 F; C08K3/04; C08K3/36; C08L9/06; C08F236/10

According to International Patent Classification (IPC) or to both national classification and IPC

**B. FIELDS SEARCHED**

Minimum documentation searched (classification system followed by classification symbols)

B60C1/00; B60C11/00; B60C11/03; C08F236/10; C08K3/04; C08K3/36; C08L9/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2022-86476 A (SUMITOMO RUBBER IND., LTD.) 09 June 2022 (2022-06-09)<br>claims, paragraphs [0001]-[0024], [0042]-[0059], [0078], [0125]-[0145], fig. 1-6 | 1-15 |
| Y | JP 2019-183101 A (SUMITOMO RUBBER IND., LTD.) 24 October 2019 (2019-10-24)<br>claims, paragraphs [0012], [0052], [0083], [0142], [0155] | 1-15 |
| Y | WO 2020/246218 A1 (SUMITOMO RUBBER IND., LTD.) 10 December 2020 (2020-12-10)<br>claims, paragraphs [0125]-[0160] | 11-13 |
| A | WO 2022/124340 A1 (BRIDGESTONE CORP.) 16 June 2022 (2022-06-16)<br>entire text | 1-15 |
| A | JP 2021-187411 A (SUMITOMO RUBBER IND., LTD.) 13 December 2021 (2021-12-13)<br>entire text | 1-15 |
| A | JP 2019-199548 A (THE YOKOHAMA RUBBER CO., LTD.) 21 November 2019 (2019-11-21)<br>entire text | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/016409**

**C. DOCUMENTS CONSIDERED TO BE RELEVANT**

| Category* | Citation of document, with indication, where appropriate, of the relevant passages | Relevant to claim No. |
|---|---|---|
| A | JP 2020-6871 A (SUMITOMO RUBBER IND., LTD.) 16 January 2020 (2020-01-16) entire text | 1-15 |
| A | JP 2018-2008 A (SUMITOMO RUBBER IND., LTD.) 11 January 2018 (2018-01-11) entire text | 1-15 |

Form PCT/ISA/210 (second sheet) (January 2015)

**INTERNATIONAL SEARCH REPORT**
**Information on patent family members**

International application No.
**PCT/JP2023/016409**

| Patent document cited in search report | Publication date (day/month/year) | Patent family member(s) | Publication date (day/month/year) |
|---|---|---|---|
| JP 2022-86476 A | 09 June 2022 | EP 3950381 A1<br>claims, paragraphs [0001]-[0022], [0040]-[0058], [0077], [0124]-[0139], fig. 1-6<br>CN 114056010 A | |
| JP 2019-183101 A | 24 October 2019 | (Family: none) | |
| WO 2020/246218 A1 | 10 December 2020 | US 2022/0235209 A1<br>claims, paragraphs [0182]-[0245]<br>EP 3904117 A1<br>CN 113474181 A | |
| WO 2022/124340 A1 | 16 June 2022 | (Family: none) | |
| JP 2021-187411 A | 13 December 2021 | EP 3919289 A1<br>CN 113752753 A | |
| JP 2019-199548 A | 21 November 2019 | EP 3795626 A1<br>CN 112119117 A<br>WO 2019/221182 A1 | |
| JP 2020-6871 A | 16 January 2020 | (Family: none) | |
| JP 2018-2008 A | 11 January 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011093386 A
- JP 2013079017 A
- JP 2014133845 A
- JP 2016037100 A
- JP 2010111753 A
- US 4414370 B
- JP 59006207 A
- JP 5058805 B
- JP 1313522 A
- US 5010166 B


### Non-patent literature cited in the description


- *Toa Synthetic Research Annual Report TREND*, 2000 (3), 42-45